# EUROPEAN PATENT APPLICATION

(11) **EP 4 292 891 A1**
(43) Date of publication of application: **20.12.2023**
(21) Application number: 22179553.7
(22) Date of filing: 17.06.2022
(51) Int. Cl.: B60T 10/02, F16D 57/04, F16D 57/02

(54) **PROPORTIONALITY VALVE FOR A HYDRAULIC ENDURANCE BRAKE SYSTEM FOR A VEHICLE, IN PARTICULAR UTILITY VEHICLE, HYDRAULIC ENDURANCE BRAKE SYSTEM AND VEHICLE, IN PARTICULAR UTILITY VEHICLE**

(71) Applicant: ZF CV Systems Europe BV, 1170 Brüssel (BE)
(72) Inventor: WYSOCKI, Pawel, 53-024 Wroclaw (PL)
(74) Representative: Ohlendorf, Henrike

(57) **Abstract**

Proportionality valve (100) for a hydraulic endurance brake system (250) for a vehicle (200a), in particular utility vehicle (200b); wherein the proportionality valve (100) comprises a connection port (110) with a fluid chamber (115) and a port inlet (116), wherein the port inlet (116) is couplable to the hydraulic endurance brake system (250) to receive a mixture (150) of oil (151) and air (152) from the hydraulic endurance brake system (250); and wherein the proportionality valve (100) comprises a deflection member (120) with a fluid inlet (121) and a fluid outlet (122), wherein the fluid inlet (121) is arranged at the port inlet (116), and the fluid outlet (122) is arranged to, by a deflection of air (152), separate oil (151) from air (152) of the received mixture (150) and to deflect air (152) towards the fluid chamber (115).

## Description

The invention relates to a proportionality valve for a hydraulic endurance brake system for a vehicle, in particular utility vehicle. The invention also relates to a hydraulic endurance brake system and to a vehicle, in particular utility vehicle.

A hydraulic endurance brake system is also referred to as a hydraulic retarder. The hydraulic endurance brake system may provide a braking torque. The braking torque may depend to an application of a pressure. Typically, the endurance brake system comprises and/or is coupled to a proportionality valve which is a controller for delivering a precise pressure, depending on required braking torque.

US 2007/0052288 A1 discloses a hydrodynamic retarder control apparatus. The hydrodynamic retarder control apparatus includes two valve spools, one, a retarder control valve, functions as a relay valve to control the on/off operation of a hydrodynamic retarder and the other, a regulator valve, functions to control the regulation of pressure at the hydrodynamic retarder. During abnormal periods of operation of the regulator valve, the retarder control valve will also function as a pressure control valve thereby limiting the maximum pressure at the hydrodynamic retarder.

During rapid pressure discharge an air flow with oil particles may be exhausted from the hydraulic endurance brake system into the proportional valve. However, the proportionality valve may comprise one or more rubber parts, such as a sealing and/or an elastic element. Oil, as a chemical fluid, can influence such a rubber part. The contamination of the proportionality valve by oil may lead to the rubber part being contaminated with oil. For example, in case of a sealing, the contamination may lead to separation of the rubber part with a surface of a volume which is to be sealed. Then, leakage may occur as consequence of contamination. Furthermore, the proportionality valve may comprise a safety valve which may be contaminated and which functioning may deteriorate due to the contamination.

It is an object of the present invention to provide a device which improves aspects of the prior art. In particular, it is an object to reduce and/or prevent oil contamination within a proportionality valve due to a pressurized mixture of oil and air.

The object is solved by the proportionality valve according to independent claim 1 and by the subject-matter according to the remaining independent claims. Dependent claims relate to preferred embodiments.

According to the invention, a proportionality valve for a hydraulic endurance brake system for a vehicle, in particular utility vehicle, is provided. Therein, the proportionality valve comprises a connection port with a fluid chamber and a port inlet, wherein the port inlet is couplable to the hydraulic endurance brake system to receive a mixture of oil and air from the hydraulic endurance brake system; and the proportionality valve comprises a deflection member with a fluid inlet and a fluid outlet, wherein the fluid inlet is arranged at the port inlet, and the fluid outlet is arranged to, by deflecting air, separate oil from air of the received mixture and to deflect air towards the fluid chamber.

The proportionality valve is adapted, by the port inlet, to be connected to the hydraulic endurance brake system. The connection between the proportionality valve and the hydraulic endurance brake system allows a fluid communication between the proportionality valve and the hydraulic endurance brake system so that the mixture of oil and air may be discharged from the hydraulic endurance brake system into the proportionality valve.

The mixture of oil and air may comprise gaseous air with a pressure being larger than ambient pressure and fluid, in particular liquid, oil particles being suspended in the gaseous air. Thus, a discharge of pressure from the hydraulic endurance brake system to the proportionality valve leads to a flow of the mixture of air and oil to the proportionality valve.

The proportionality valve comprises the deflection member. The deflection member is arranged at the port inlet, and the deflection member is adapted so that air can flow through the port inlet via the fluid inlet and the fluid outlet to the fluid chamber. While the mixture of air and oil flows into the fluid inlet, the deflection member deflects the air to flow in a different direction than the oil. In particular, the air is deflected into the fluid chamber while the oil is prevented from flowing into the fluid chamber. Thus, by deflecting the air, the mixture of oil and air is separated in air which flows in the fluid chamber and oil which is prevented from flowing into the separation chamber.

The deflection member enables that a contamination with oil may be prevented. Air can flow into the fluid chamber. Thereby, the proportionality valve may function reliably and in particular rubber is not affected by contamination of oil. Providing the deflection member at the port inlet is cost-effective and may enable to retro-fit the deflection member to an existing proportionality valve.

Preferably, each of the port inlet and the deflection member comprises a cylindrical shape. In other words, each of the port inlet and the deflection member comprises a cylindrical section. This enables an efficient manufacture of the deflection member and an efficient arrangement of the deflection member within the port inlet, in particular by arranging a cylindrical section of the deflection member in a cylindrical section of the port inlet.

Preferably, the fluid inlet and the fluid outlet are arranged perpendicular to each other. I.e., the fluid inlet and the fluid outlet enclose an angle of 90 °. The perpendicular arrangement of the fluid inlet with respect to the fluid outlet implies that a fluid which is flowing from the fluid inlet through the deflection member to the fluid outlet cannot flow straight through the deflection member. I.e., the fluid is effectively deflected within the deflection member. In particular, the deflection may lead to a deflection of air while oil particles are not being deflected. Therewith, air and oil are separated from each other by the deflection of air. In another embodiment, the fluid inlet and the fluid outlet may enclose an angle different than 90 °.

Preferably, the fluid inlet is arranged at a first base of the deflection member. Therein, the deflection member comprises a plurality of surfaces which are distinguishable from each other by the orientation of the surface. One of the surfaces is the first base. In an embodiment of the deflection member with a cylindrical section, the first base may be a base surface of the cylindrical section. Therein, the first base comprises an opening as the fluid inlet to enable the mixture to flow into the deflection member. This embodiment allows an efficient arrangement of the fluid inlet, in particular with respect to the arrangement of the deflection member in the port inlet.

Preferably, the deflection member comprises a solid second base. Therein, the deflection member comprises a plurality of surfaces which are distinguishable from each other by the orientation of the surface. One of the surfaces is the second base. In an embodiment of the deflection member with a cylindrical section, the second base may be a base surface of the cylindrical section. The second base may be arranged opposite the first base, i.e., the first base and the second base are separated from each other by a lateral surface. Therein, the second base is solid to prevent the mixture to flow through the second base. This embodiment allows an efficient deflection of air and separation of oil from air.

Preferably, the fluid outlet is arranged at a lateral surface of the deflection member. Therein, the deflection member comprises a plurality of surfaces which are distinguishable from each other by the orientation of the surface. One of the surfaces is the lateral surface. In an embodiment of the deflection member with a cylindrical section, the lateral surface may be a lateral surface of the cylindrical section which is perpendicular to base surfaces. Therein, the lateral surface comprises an open as the fluid outlet to enable the air to flow from the deflection member into the fluid chamber. This embodiment allows an efficient arrangement of the fluid outlet and an efficient deflection of air and separation of oil from air.

Preferably, the fluid outlet is adapted to deflect the air in a deflection plane, and the oil contamination protection arrangement comprises a safety valve which is arranged outside the deflection plane. Alternatively, the fluid outlet is adapted to deflect the air in a deflection direction, wherein the deflection direction is arranged within the deflection plane. In other words, the fluid outlet is adapted and arranged to control the flow of air in a well-defined direction. Air is exhausted by the fluid outlet in the deflection plane. Thus, exhausted air flows in the deflection plane. Even if oil particles might be left in the exhausted air, a contamination of the safety valve may be reduced and/or prevented as the safety valve is arranged outside the deflection plane so that exhausted air does not immediately flow towards the safety valve. This enables a preferred separation of air from gas and a well-defined deflection of air into the fluid chamber. This enables a reliable functioning of the safety valve.

Preferably, the deflection member is made of plastic. In this embodiment, the deflection member is particularly cost-effective and efficiently to manufacture. The deflection member may be manufactured by deep-drawing and/or injection molding. Alternatively, the deflection member may be made of metal.

According to another aspect of the invention, a hydraulic endurance brake system for a vehicle, in particular utility vehicle, is provided. Therein, the hydraulic endurance brake system comprises the proportionality valve as described herein. The proportionality valve may comprise a feature as being described as preferred and/or optional to achieve a technical effect that corresponds therewith.

According to another aspect of the invention, a vehicle, in particular utility vehicle, is provided. The vehicle, in particular utility vehicle, comprises the hydraulic endurance brake system as described herein. Therein, the hydraulic endurance brake system comprises the proportionality valve as described herein. The proportionality valve may comprise a feature as being described as preferred and/or optional to achieve a technical effect that corresponds therewith.

Further advantages and technical features and their technical effects are disclosed in the figures and the description thereof.

The figures show preferred embodiments as follows:
Fig. 1 a side view of a proportionality valve according to an embodiment of the invention;
Fig. 2 a side view of a detail of a proportionality valve according to an embodiment of the invention;
Fig. 3 a perspective view of a deflection member of a proportionality valve according to an embodiment of the invention;
Fig. 4 a perspective view of a fluid chamber of a proportionality valve according to an embodiment of the invention;
Fig. 5 a side view of a fluid chamber of a proportionality valve according to an embodiment of the invention;
Fig. 6 a sectional view of a fluid chamber of a proportionality valve according to an embodiment of the invention; and
Fig. 7 a schematic of a vehicle, in particular utility vehicle, according to an embodiment of the invention.

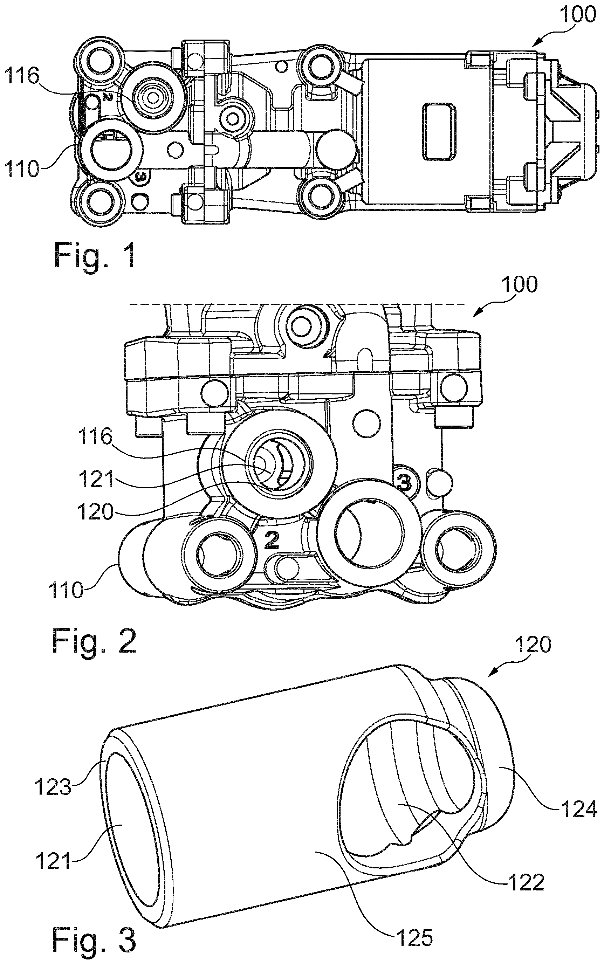

Figure 1 shows a side view of a proportionality valve 100 according to an embodiment of the invention.

The proportionality valve 100 is adapted to be coupled to a hydraulic endurance brake system 250 (not shown in Figure 1) for a vehicle 200a, in particular utility vehicle 200b. To couple the proportionality valve 100 to the hydraulic endurance brake system 250, the proportionality valve 100 comprises a connection port 110. The connection port 110 comprises a port inlet 116. The port inlet 116 is an opening in the connection port 110 and enables a fluid communication between the proportionality valve 100 and the hydraulic endurance brake system 250 being coupled to the proportionality valve 100. Via the port inlet 116, a pressurized mixture 150 of oil 151 and air 152 may be discharged from the hydraulic endurance brake system 250 to the proportionality valve 100.

Figure 2 shows a side view of a detail of a proportionality valve 100 according to an embodiment of the invention. Therein, the detail shows the proportionality valve 100 as shown in Figure 1. Figure 2 is described under reference to Figure 1 and the description thereof.

As shown in Figure 2, the proportionality valve 100 comprises a deflection member 120 with a fluid inlet 121. The deflection member 120 is arranged in the port inlet 116 so that the fluid inlet 121 is arranged at the port inlet 116. Thus, the pressurized mixture 150 may flow from the hydraulic endurance brake system 250 via the deflection member 120 and its fluid inlet 121 to the proportionality valve 100.

Each of the port inlet 116 and the deflection member 120 comprises a circular cross section. Specifically, each of the port inlet 116 and the deflection member 120 comprises a cylindrical section, wherein the port inlet 116 and the deflection member 120 are dimensioned so that the deflection member 120 and the cylindrical section thereof is insertable into the port inlet 116 and the cylindrical section thereof. I.e., the port inlet 116 comprises a diameter that is larger than a diameter of the deflection member 120.

The deflection member 120 is further described with reference to Figure 3.

Figure 3 shows a perspective view of a deflection member 120 of a proportionality valve 100 according to an embodiment of the invention. Figure 3 shows the deflection member 120 as already described with reference to Figure 2.

The deflection member 120 comprises a cylindrical shape. I.e., the deflection member 120 comprises a first base 123 and a second base 124 at opposite ends of the deflection member 120, wherein the first base 123 and the second base 124 are separated from each other by a lateral surface 125. Therein, the lateral surface 125 is partially rotationally symmetric, i.e., the lateral surface 125 comprises a rotationally symmetric section.

The deflection member 120 comprises the fluid inlet 121 and a fluid outlet 122. The fluid inlet 121 and the fluid outlet 121 are arranged perpendicular to each other. Specifically, the fluid inlet 121 is arranged at the first base 123 of the deflection member 120 and the fluid outlet 122 is arranged at the lateral surface 125 of the deflection member 120. Thus, the fluid inlet 121 and the fluid outlet 122 enclose an angle of 90 °.

The deflection member 120 comprises a solid second base 124. Thus, a fluid flowing through the deflection member 120 enters the deflection member 120 at the fluid inlet 121 at the first base 123, is deflected, and leaves the deflection member 120 at the fluid outlet 122 at the lateral surface 125. Thus, if a mixture 150 of oil 151 and air 152 enters the deflection member 120, the gaseous air 152 is deflected while fluid particles of oil 151 may, due to their inertia, collide with and/or impact at the solid second base 124. At the solid second base 124, oil 151 particles may be collected to be discharged otherwise. Thus, the fluid outlet 122 is arranged to, by a deflection of air 152, separate oil 151 from air 152 of the received mixture 150 and to deflect air 152 towards the fluid chamber 115.

The deflection member 120 is made of plastic.

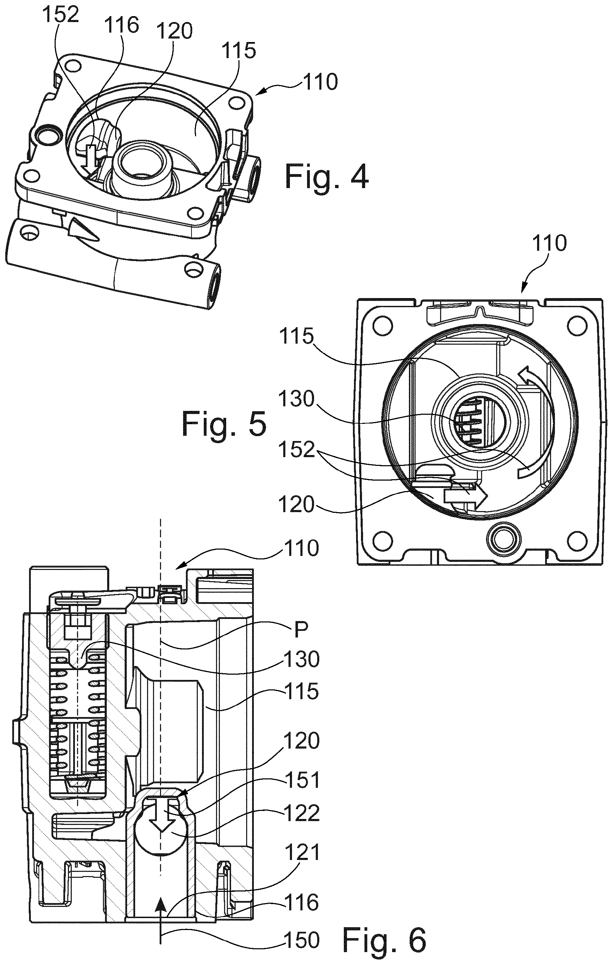

Figure 4 shows a perspective view of a fluid chamber 115 of a proportionality valve 100 according to an embodiment of the invention. The proportionality valve 100 is described with reference to Figures 1 and 2. In Figure 4, the connection port 110 of the proportionality valve 100 is shown. The connection port 110 comprises the fluid chamber 115. The fluid chamber 115 is housed by the connection portion 110. Therein, the fluid chamber 115 is fluidly couplable to the hydraulic endurance brake system 250 via the inlet port 116. The deflection member 120 as described with reference to Figure 3 is arranged in the inlet port 116.

As shown in Figure 4, the deflection member 120 is arranged in the inlet port 116, and the fluid outlet 122 (not indicated in Figure 4) of the deflection member 120 is directed towards the fluid chamber 115. Air 152 may flow through the deflection member 120 via the fluid outlet 122 into the fluid chamber 115.

Figure 5 shows a side view of a fluid chamber 115 of a proportionality valve 100 according to an embodiment of the invention. Figure 5 is described under reference to Figure 4 and the description thereof. Figure 5 shows another perspective compared to Figure 4 and indicates the flow of air 152 within the fluid chamber 115. The fluid chamber 115 comprises an essentially cylindrical shape, wherein the port inlet 116 and the deflection member 120 are arranged at a lateral surface of the fluid chamber 115. The deflection member 120 is oriented so that the air 152 flows co-axially within the fluid chamber 115.

The proportionality valve 100 comprises a safety valve 130. The safety valve 130 is arranged and adapted to release pressurized air 152 to an environment. E.g., if the pressure of the pressurized air 152 exceeds a threshold, the safety valve 130 releases the pressurized air 152 to the environment.

Figure 6 shows a sectional view of a fluid chamber 115 of a proportionality valve 100 according to an embodiment of the invention. Figure 6 is described under reference to Figures 4 and 5 and the description thereof. Figure 6 shows another perspective compared to Figures 4 and 5.

As illustrated in Figure 6, a mixture 150 of oil 151 and air 152 may be discharged from the hydraulic endurance brake system 250 into the proportionality valve 100 and enters the deflection member 120 at the fluid inlet 121 as indicated by the arrow. Air 152 is deflected as described above and oil 151 particles impact at the solid second base 124 of the deflection member 120. The impacting particles of oil 151 may settle on the solid second base 124 and, given a proper orientation of the proportionality valve 100, may be discharged and/or flow into the hydraulic endurance brake system 250, e.g., caused by gravity. For example, the particles of oil 151 are collected within the deflection member 120 at the solid second base 124 and the collected oil 151 flows downwards, as indicated by the solid arrow, back through the fluid inlet 121 to the hydraulic endurance brake system 250.

The fluid outlet 122 is adapted to deflect the air 152 in a deflection plane P. The deflection plane P is defined by the direction and/or arrangement of the fluid outlet 122. Air 151 is discharged as also described with reference to Figure 5 and flows within the deflection plane P. The deflection plane P is arranged radially with respect to the cylindrically-shaped fluid chamber 115. The safety valve 130 is arranged outside the deflection plane P.

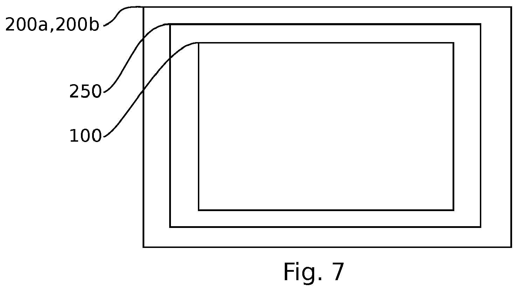

Figure 7 shows a schematic of a vehicle 200a, in particular utility vehicle 200b, according to an embodiment of the invention. The expression vehicle 200a comprises any utility vehicle 200b, i.e., commercial vehicle, such as busses, trucks, lorries, goods vehicles, trailers, truck-trailers. The vehicle 200a, in particular utility vehicle 200b, comprises the hydraulic endurance brake system 250. The hydraulic endurance brake system 250 comprises the proportionality valve 100 as described with reference to Figures 1 to 6.

### List of reference signs (Part of the description)

- 100: proportionality valve
- 110: connection port
- 115: fluid chamber
- 116: port inlet

- 120: deflection member
- 121: fluid inlet
- 122: fluid outlet
- 123: first base
- 124: second base
- 125: lateral surface

- 130: safety valve

- 150: mixture
- 151: oil
- 152: air

- 200a: vehicle
- 200b: utility vehicle
- 250: hydraulic endurance brake system
- P: deflection plane

## Claims

1. Proportionality valve (100) for a hydraulic endurance brake system (250) for a vehicle (200a), in particular utility vehicle (200b); wherein
- the proportionality valve (100) comprises a connection port (110) with a fluid chamber (115) and a port inlet (116), wherein the port inlet (116) is couplable to the hydraulic endurance brake system (250) to receive a mixture (150) of oil (151) and air (152) from the hydraulic endurance brake system (250); **characterized in that**
- the proportionality valve (100) comprises a deflection member (120) with a fluid inlet (121) and a fluid outlet (122), wherein the fluid inlet (121) is arranged at the port inlet (116), and the fluid outlet (122) is arranged to, by a deflection of air (152), separate oil (151) from air (152) of the received mixture (150) and to deflect air (152) towards the fluid chamber (115).

2. Proportionality valve as claimed in claim 1, wherein each of the port inlet (116) and the deflection member (120) comprises a cylindrical shape.

3. Proportionality valve as claimed in any one of the preceding claims, wherein the fluid inlet (121) and the fluid outlet (121) are arranged perpendicular to each other.

4. Proportionality valve as claimed in any one of the preceding claims, wherein the fluid inlet (121) is arranged at a first base (123) of the deflection member (120).

5. Proportionality valve as claimed in any one of the preceding claims, wherein the deflection member (120) comprises a solid second base (124).

6. Proportionality valve as claimed in any one of the preceding claims, wherein the fluid outlet (122) is arranged at a lateral surface (125) of the deflection member (120).

7. Proportionality valve as claimed in any one of the preceding claims, wherein the fluid outlet (122) is adapted to deflect the air (152) in a deflection plane (P), and the proportionality valve (100) comprises a safety valve (130) which is arranged outside the deflection plane (P).

8. Proportionality valve as claimed in any one of the preceding claims, wherein the deflection member (120) is made of plastic.

9. Hydraulic endurance brake system (250) for a vehicle (200a), in particular utility vehicle (200b), wherein the hydraulic endurance brake system (250) comprises the proportionality valve (100) as claim in any one of the preceding claims.

10. Vehicle (200a), in particular utility vehicle (200b), comprising the hydraulic endurance brake system (250) as claimed in claim 9.
